Europäisches Patentamt

European Patent Office

Office européen des brevets

(11) Publication number: **0 169 762**
**B1**

(12) **EUROPEAN PATENT SPECIFICATION**

(45) Date of publication of patent specification: 05.09.90

(51) Int. Cl.⁵: **H 02 N 13/00, G 01 P 15/08**

(21) Application number: 85401259.8

(22) Date of filing: 24.06.85

(54) Device for electrostatically suspending a body or sample.

(30) Priority: 25.06.84 FR 8410018

(43) Date of publication of application:
29.01.86 Bulletin 86/05

(45) Publication of the grant of the patent:
05.09.90 Bulletin 90/36

(84) Designated Contracting States:
DE GB IT

(56) References cited:
US-A-3 438 267

N.T.I.S. TECHNICAL NOTES: NASA TECHBRIEF,
no. A-K, June 1984, page 439, Springfield,
Virginia, US; "Electrostatic levitator with
feedback control"

PROCEEDINGS OF THE IEEE, vol. 52, no. 6, June
1964, pages 732-733, IEEE, New York, US; P.A.
SILBERG et al.: "Electrostatically induced rotary
and vortical motion"

(73) Proprietor: Office National d'Etudes et de
Recherches Aérospatiales (O.N.E.R.A.)
29 Avenue de la Division Leclerc
F-92320 Châtillon-sous-Bagneux (FR)

(72) Inventor: Bernard, Alain Maurice
2, allée des Renardeaux
F-94260 Fresnes (FR)
Inventor: Canny, Jean-Paul Louis
60, rue Simon Guetlevitch
F-92350 Villemonble (FR)
Inventor: Touboul, Pierre Lucien
1ter, rue Henri Barbusse
F-78390 Bois D'Arcy (FR)

(74) Representative: Martinet & Lapoux
62, rue des Mathurins
F-75008 Paris (FR)

Courier Press, Leamington Spa, England.

**Description**

BACKGROUND OF THE INVENTION

The present invention relates to an electrostatic suspension device or levitator in microgravity or gravity conditions for a sample of material.

When producing materials in space by thermal and/or chemical processes, it is necessary in certain cases to obviate any contamination of the material that might be caused by physical contact with a holder or a crucible.

In Patent US—A—4 059 797 filed December 27, 1976, in the name of the assignee of the present application discloses electrostatic suspension accelerometers in which the acceleration measurement is deduced from the forces required to hold a test weight in a position defined with respect to the body of the apparatus or to return said weight to this position, wherein the forces used are electrostatic in nature.

Those accelerometers that are three-dimensional in nature comprise a floating test weight, spherical or cubic in shape, and a set of electrodes, made up of at least two electrodes per unidirection, that serve both in detecting the position of the test weight and in repositioning said weight by slaving. The difference in capacity generated by two aligned electrodes and the test weight is measured using an alternating current across the said electrodes and the resultant signal is processed in a proportional, integral, differential circuit which delivers repositioning signals that are fed to the same electrodes.

In apparatus of this nature, the test weight can be steadied or stabilized only when the arrangement is three-dimensional and comprises at least six electrodes. Further, the potential on the test weight must be held equal to that of the apparatus body for maximum accuracy.

The article "Electrostatic Levitator With Feedback Control" in N.T.I.S. Technical Notes, June 1984, No. A-K, Springfield, Virginia, USA, discloses an electrostatic levitator having two curved shape electrodes, a CCD camera for detecting the position of a sample between the two electrodes, and digital means, such as a computer, for controlling by feedback variations of high voltages applied to the electrodes by a high voltage source. As a consequence of the electrode shape, this levitator only can stabilise the sample on a position along a symmetry axis of the electrodes. Further, the means used to perform the feedback control are expensive and limited in speed.

The main object of the present invention is an electrostatic suspension device or levitator for a sample of material, that is stable space-wise although it comprises only two electrodes.

A further object of the invention is an electrostatic suspension device that is stable space-wise although it comprises only three electrodes.

In accordance with a feature of the invention, which is set out in claim 1, the device for suspending a material sample comprises at least two electrodes used simultaneously for capacitive position detection and for electrostatic positioning control, wherein the electrodes are spherical in shape and the sample is electrically charged.

A further feature of the invention is that the suspension device comprises, besides the two spherical electrodes, a third annular electrode that it raised to a potential with the same polarity as the charge on the sample.

Before going any further, a theoretical look will be taken at the movement of a conducting body in an electrostatic field pattern.

The electrical charges will be given the letter Q, the potentials V, the relative capacitances C and the forces F. The index 1 is used for the sample and the indices 2 to n for the electrodes.

To establish the value of the electrostatic force exerted on the sample, it is possible to consider a virtual displacement thereof in which the potentials $V_2$ to $V_n$ are constant as is the charge $Q_1$ on the sample. During this virtual displacement, the charges $Q_2$ to $Q_n$ and the potential $V_1$ vary. The force $F_z$ applied to the sample along the direction z may be written as:

$$F_z = -\frac{\partial}{\partial z}\left[\sum_{i=1}^{n} \frac{1}{2} Q_i V_i\right] + \sum_{i=2}^{n} V_i \frac{\partial Q_i}{\partial z} \qquad (1)$$

The charges $Q_i$ may be expressed in terms of the voltage $V_i$ by the matrix equation:

$$Q_i = \sum_{j=1}^{n} C_{ij} V_{ij} \qquad (2)$$

2

where $C_{i,j}$ is the relative capacitance between the electrodes i and j when $i \neq j$ and the self-capacitance of an electrode when $i = j$. $C_{i,j}$ is considered to be negative and $C_{i,i}$ positive.

On the basis of equations (1) and (2), the following expression can be obtained for the force $F_z$:

$$F_z = a\,(Q_1^2) + \sum_{i,j=2}^{n} b_{ij}\,(V_i\,V_j) + \sum_{i=2}^{n} d_i\,(Q_1\,V_i) \qquad (3)$$

It can be seen from expression (3) that the force $F_z$ is made up of three components:

(1) attractive forces betwen the charges sample and its electrical images on the electrodes around it, where these forces take the form of

$$aQ_1^2;$$

(2) attractive or repellent forces between each electrode and the charges images of all the electrodes, carried by the suspended sample; these forces take the form $b_{i,j}\,V_i\,V_j$, where $V_i$ and $V_j$ are the potentials on the electrodes i and j;

(3) forces of the form $d_i\,Q_1\,V_i$ representing the attraction or repulsion of each electrode i on the charge $Q_1$ carried by the sample.

The coefficients a, $b_{i,j}$ and $d_i$ are combinations of the electrostatic relative capacitance coefficients and the spatial derivatives thereof and are therefore functions of the spatial coordinates of the sample in suspension.

Assuming that the suspension arrangement, in addition to the sample 1, contains two spherical electrodes 2 and 3 and a conducting envelope 4 such that the conductors 1, 2, 3 and 4 present self inductance or develop relative inductance therebetween, then equation (3) may be written in terms of the coefficients, $C_{11}$, $C_{12}$, $C_{13}$, $C_{22}$, $C_{23}$, $C_{33}$ (it is assumed that $V_3 = -V_2$):

$$F_z = \frac{1}{2}\,\frac{\partial C_{11}}{\partial z}\,\frac{Q_1^2}{C_{11}^{2}}$$

$$+ \frac{1}{2}\,\frac{\partial}{\partial z}\left[ C_{22} + C_{33} - \frac{(C_{12} - C_{13})^2}{C_{11}} - 2C_{23} \right] V_2^2$$

$$+ \frac{\partial}{\partial z}\left(\frac{C_{12} - C_{13}}{C_{11}}\right) Q_1\,V_2$$

If there is also a toric electrode 5, equation (3) may be expressed in terms of the aforesaid relative and self capacitance coefficients plus $C_{15}$, $C_{25}$, $C_{35}$, $C_{55}$:

$$F_z = \frac{1}{2} \frac{\partial C_{11}}{\partial z} \frac{Q_1^2}{C_{11}^2}$$

$$+ \frac{1}{2} \frac{\partial}{\partial z} \left[ C_{22} + C_{33} - \frac{(C_{12} - C_{13})^2}{C_{11}} - 2C_{23} \right] V_2^2$$

$$+ \frac{\partial}{\partial z} \left( \frac{C_{12} - C_{13}}{C_{11}} \right) Q_1 V_2$$

$$+ \frac{1}{2} \frac{\partial}{\partial z} \left( C_{55} - \frac{C_{15}^2}{C_{11}} \right) V_5^2$$

$$+ \frac{\partial}{\partial z} \left( \frac{C_{15}}{C_{11}} \right) Q_1 V_5$$

$$+ \frac{\partial}{\partial z} \left( C_{25} - C_{35} - \frac{C_{15}}{C_{11}} (C_{12} - C_{13}) \right) V_2 V_5$$

The foregoing objects and features will become apparent from the following detailed description with reference to the accompanying drawings in which:

Fig. 1 represents a suspension system with two spherical electrodes;

Fig. 2 represents a suspension system with three electrodes, two spherical and one annular or toric;

Fig. 3 depicts the principle of capacitive detection of the sample position;

Fig. 4 represents the system for superposing position detection and positional control signals on the electrodes;

Fig. 5 represents slaving along one axis together with the electrical connections between the electrodes and the position detection and positional control currents; and

Fig. 6 represents a three-dimensional suspension device.

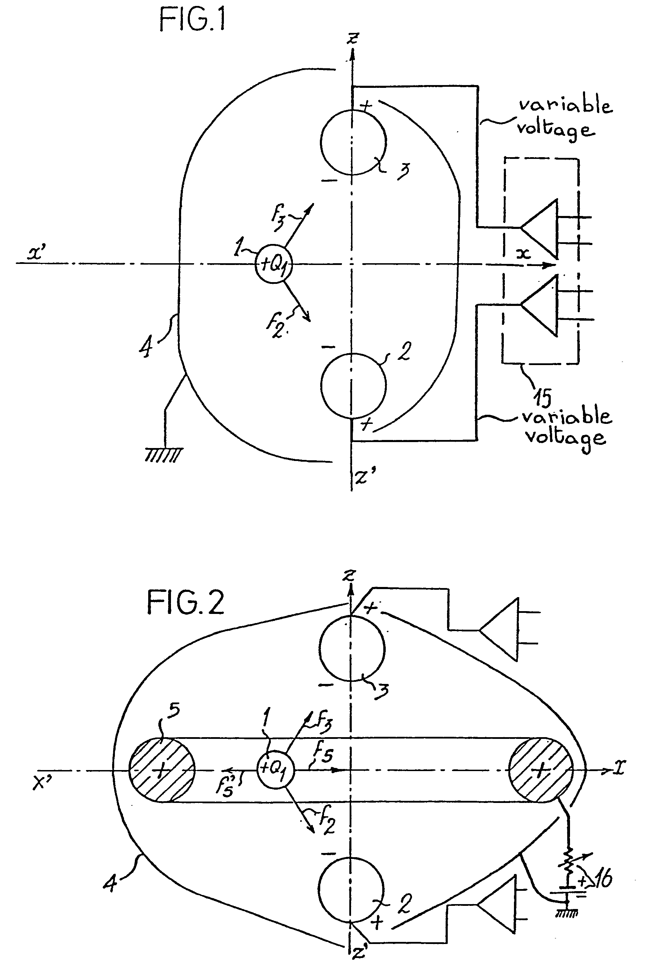

With reference first of all to Fig. 1, the suspended sample carries the reference numeral 1 and the spherical electrodes, numerals 2, and 3. Supply to the electrodes comes from a system 15 made up of two amplifiers delivering two voltages of opposed polarities. Thus an electrostatic field is produced between the electrodes and the field develops a Coulomb's force on the sample. Further the charged sample develops charges of polarity opposed to its own polarity on the electrodes which charges acting upon the sample charge develop attractive forces by capacitance effect. Thus the sample is subjected to the forces $f_2$ and $f_3$ that exert an attractive pull towards the axis z'z such that the slaving arrangement along this axis also holds the sample in the xOy plane.

With reference now to Fig. 2, a metal toroid 5 is disposed at the mid-point of the line joining the electrodes 2 and 3 perpendicularly to said line. That the annular electrode 5 reduces only very slightly the electrostatic capacitance between the sample and the spherical electrodes. The charges images of $Q_1$ on the ring 5 generate a destabilizing effect $f'_5$. By giving the ring a potential with the same polarity as the sample charge, a stabilizing force $f_5$ is obtained and this force $f_5$ can be made greater than $f'_5$ via an adjustable voltage source 16.

In the suspension devices in Figs. 1 and 2, the sample 1 carries a charge $+Q_1$. By way of an example, this charge can be achieved as follows: all the electrodes being grounded, the sample is put momentarily brought into contact with a high voltage source of 10 kV. If it is assumed that $C_{11} = 3pF$, the value on the charge is $3 \times 10^{-8}$ coulombs.

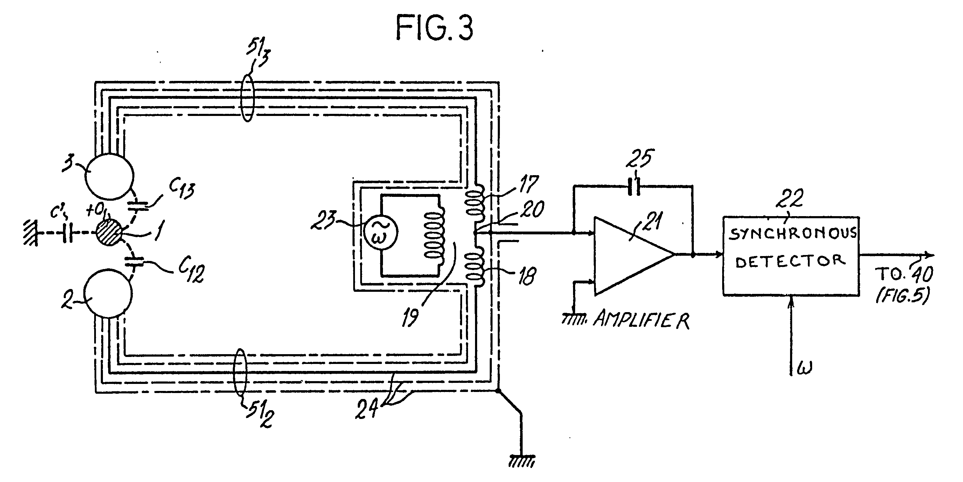

In Fig. 3, the electrodes 2 and 3 are connected to the secondary windings 17 and 18 of a differential transformer 19, such that the capacities existing between the electrodes and the sample become part of a capacitive bridge.

4

The mid-point 20 on the secondary windings is connected to an operational amplifier 21, itself wired to a synchronous detector 22. The latter receives the differential transformer supply current fed by the alternating source 23 and delivers a signal proportional to the difference in the capacitances coefficients ($C_{13}$—$C_{12}$) and hence the positional fluctuation in the sample. Use is made of triaxial cables 32 and 33 to connect the electrodes to the differential transformer secondary windings to prevent the position measurement from depending on stray capacities in the connection wiring. The stray capacities between the connections (inside wire) and inside sheathing are in parallel with the low impedance of the secondary windings 18—19. The stray capacities between the inside and outside sheathing are in parallel with the input impedance on the amplifier 21 that is reduced to a very low level by capacitive feedback (capacitor 25).

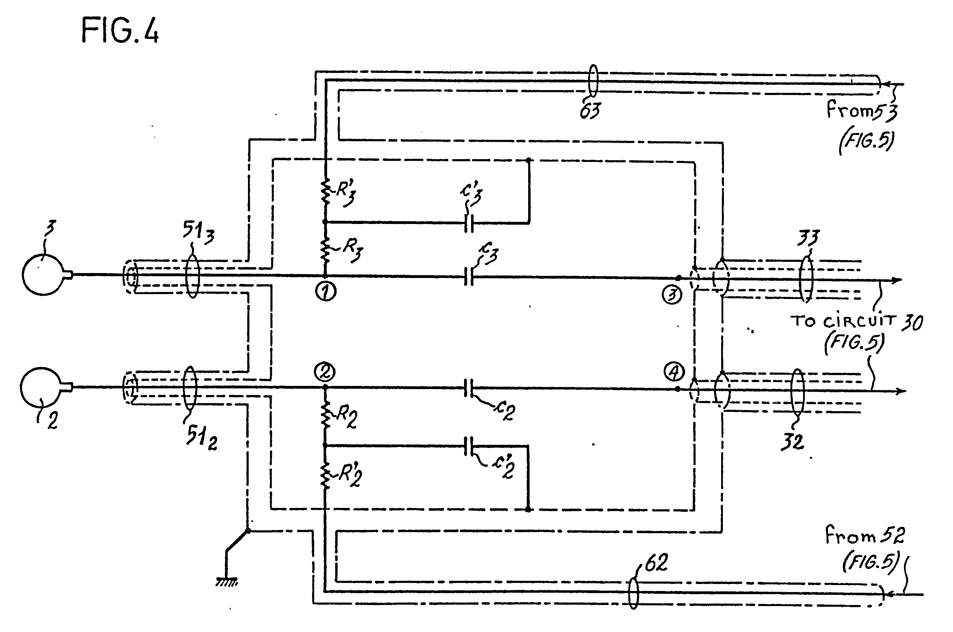

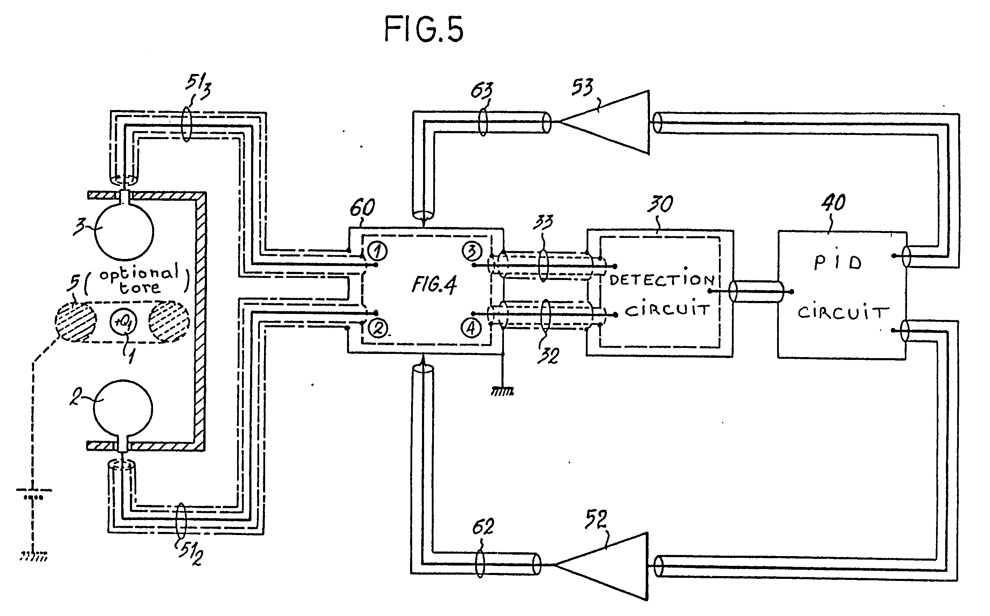

The detecting circuit 30 (Fig. 5) is as described in relation to Fig. 4 in U.S. Patent No. 4 059 797 of December 27, 1976. No description of this circuit is given here. The circuit 30 is wired to a corrector circuit 40 of the "proportional, integral, differential" type delivering two signals in phase opposition that are fed to high voltage amplifiers 52 and 53. The outputs from these amplifiers are connected via the leads 62 and 63 to the circuit 60 for superposing high frequency and low voltage position detection signals and low frequency and high voltage positional control signals.

The superposing circuit 60 (Fig. 4) receives the position detection signals via triaxial cables $51_2$ and $51_3$ as well as the positioning control signals via the coaxial cables 62 and 63. It sends the position detection signals to the circuit 30 via the triaxial cables 32 and 33.

The detection signals are high frequency and the positioning control signals are either low frequency or direct current. The former are fed across capacitors $\varphi_2$ and $\varphi_3$ and the latter via resistors $R_2$, $R'_2$ and $R_3$, $R'_3$. The capacitors $\varphi'_2$ and $\varphi'_3$ improve the decoupling.

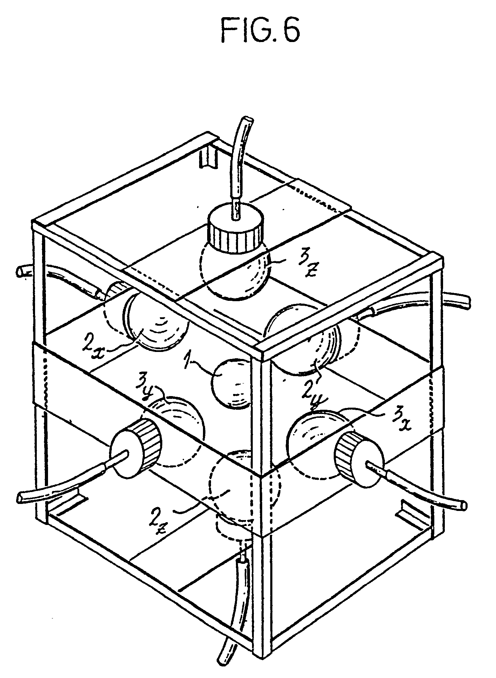

Fig. 6 represents a three-dimensional suspension device. It illustrates in particular the charged sample 1 and six spherical electrodes $2_x$, $2_y$, $2_z$ and $3_x$, $3_y$, $3_z$.

Although the invention has been described in relation to a given example of an embodiment, it is quite clear that other variations are possible without departing from the scope of the claims. By way of an example, the detection and positioning control signals have been separated by routing one type via a capacitive path and the other via resistive path. It would, of course, be possible to separate them using a system of filters.

**Claims**

1. A device for electrostatically suspending a sample of material (1) comprising at least two conductive spherical electrodes (2, 3) respectively fed by high voltages ($V_i$, $V_j$) of opposite polarity and arranged for applying to the sample (1) first electrostatic forces ($b_{ij}.V_i.V_j$) which are proportional to the product of the eleltrode high voltages ($V_i$, $V_j$) applied, means (30) for detecting variations of position of the sample (1) from a predetermined wanted position, and means (40, 52, 53, 60) for varying by feedback the electrode high voltages ($V_i$) on dependency of said detected position variations, characterized in that an electrostatic charge ($Q_1$) is first applied to the sample (1) whereby when the device is operating the sample is additionally submitted to a second electrostatic force ($a.Q^2_1$) which is proportional to the square of the sample charge ($Q_1$) and to third electrostatic forces ($d_i.V_i.Q_1$) which are proportional to the product of the electrode high voltages ($V_i$) and said sample charge ($Q_1$), in that the spherical electrodes (2, 3) have convex surfaces turned towards the sample (1), and in that the device further comprises a conductive screen (4) surrounding the sample (1) and the electrodes (2, 3) and which is brought to a ground potential in order to preserve the sample charge ($Q_1$) from any electromagnetic inteferences, and a toroïd conductive electrode (5) having its center at the mid-point of the line joining the centers of two spherical electrodes (2, 3), said toroïd electrode (5) being brought to a voltage having the same polarity as the sample charge ($Q_1$).

2. A device for electrostatically suspending a sample according to claim 1, characterized in that the sample electrostatic charge is positive.

3. A device for electrostatically suspending a sample as claimed in either claim 1 or 2, characterized in that the device comprises a differential transformer (19) with a primary winding fed with alternating current and two secondary windings connected to the spherical electrodes (2, 3), via a circuit (60) for superposing sample position detection signals and sample positioning control signals to form a capacitive measuring bridge and to measure the differences in the capacitance coefficients ($C_{22}$, $C_{23}$) between the sample (1) and the electrodes (2, 3) wherein the lines ($51_2$, $51_3$) connecting the electrodes (2, 3) to the transformer (19) are triaxial cables with an inner sheathing connected to the mid-point (20) of the secondary windings and an outer sheathing connected to the ground potential.

**Patentansprüche**

1. Vorrichtung zur elektrostatischen Schwebehalterung einer Materialprobe (1), umfassend wenigstens zwei leitende spärische Elektroden (2, 3), an die jeweils Hochspannungen ($V_i$, $V_j$) entgegengesetzter Polarität angelegt sind und die angeordnet sind, auf die Probe (1) erste elektrostatische Kräfte ($b_{ij} \times V_i \times V_j$) anzuwenden, die zu dem Produkt der angelegten Elektrodenhochspannungen ($V_i$, $V_j$) proportional sind, eine Einrichtung (30) zur Erfassung von Positionsänderungen der Probe (1) von einer vorbestimmten

5

gewünschten Position fort und eine Einrichtung (40, 52, 53, 60) zur Rückkopplungsänderung der Elektrodenhochspannungen ($V_i$) abhängig von den erfaßten Positionsänderungen, dadurch gekennzeichnet, daß zuerst eine elektrostatische Ladung ($Q_1$) auf die Probe (1) aufgebracht wird, wodurch, wenn die Vorrichtung arbeitet, die Probe zusätzlich einer zweiten elektrostatischen Kraft (a. $Q^2{}_1$), die zum Quadrat der Probenladung ($Q_1$) Proportional ist, und dritten elektrostatischen Kräften ($d_i.V_i.Q_1$) ausgesetzt ist, die zum Produkt der Elektrodenhochspannungen ($V_i$) und der Probenladung ($Q_1$) proportional sind, daß die sphärischen Elektroden (2, 3) zur Probe (1) hin gewendete konvexe Flächen aufweisen und daß die Vorrichtung weiter eine die Probe (1) und die Elektroden (2, 3) umgebende leitende Abschirmung (4), die auf ein Erdpotential gebracht ist, um die Probenladung ($Q_1$) vor jeglichen elektromagnetischen Störungen zu schützen, und eine leitende Toroidelektrode (5) umfaßt, deren Zentrum sich am Mittelpunkt der die Zentren der beiden sphärischen Elektroden (2, 3) verbindenden Linie befindet, wobei die Toroidelektrode (5) auf eine Spannung gebracht ist, die dieselbe Polarität wie die Probenladung ($Q_1$) aufweist.

2. Vorrichtung zur elektrostatischen Schwebehalterung einer Probe nach Anspruch 1, dadurch gekennzeichnet, daß die elektrostatische Probenladung positiv ist.

3. Vorrichtung zur elektrostatischen Schwebehalterung einer Probe nach entweder Anspruch 1 oder 2, dadurch gekennzeichnet, daß die Vorrichtung einen Differentialübertrager (19) umfaßt, wobei eine Primärwicklung mit einem Wechselstrom gespeist ist und zwei Sekundärwicklungen mit den sphärischen Elektroden (2, 3) über einen Kreis (60) verbunden sind, um Probenpositionserfassungssignale und Probenpositionssteuersignale zur Bildung einer kapazitiven Meßbrücke und zur Messung der Differenzen der Kapazitätskoeffizienten ($C_{12}$, $C_{13}$) zwischen der Probe (1) und den Elektroden (2, 3) zu überlagern, wobei die die Elektroden (2, 3) mit dem Übertrager (19) verbindenden Leitungen ($51_2$, $51_3$) dreiaxiale Kabel mit einem mit dem Mittelpunkt (20) der Sekundärwicklungen verbundenen Innenmantel und einem mit dem Erdpotential verbundenen Außenmantel sind.

## Revendications

1. Un dispositif de suspension électrostatique d'un échantillon de matériau (1) comprenant au moins deux électrodes sphériques conductrices (2, 3) alimentées respectivement par des potentiels élevés ($V_i$, $V_j$) de polarité opposée et disposées pour appliquer à l'échantillon (1) des premières forces électrostatiques ($b_{ij}.V_i.V_j$) qui sont proportionnelles au produit des potentiels élevés d'électrode ($V_i$, $V_j$) appliqués, des moyens (30) pour détecter des variations de position de l'échantillon (1) à partir d'une position désirée prédéterminée, et des moyens (40, 52, 53, 60) pour faire varier par contreréaction les potentiels élevés d'électrode ($V_i$) en dépendance desdites variations de position détectées, caractérisé en ce qu'une charge électrostatique ($Q_1$) est d'abord appliquée à l'échantillon (1) afin que, lors du fonctionnement du dispositif, l'échantillon soit en outre soumis à une seconde force électrostatique (a. $Q^2{}_1$) qui est proportionnelle au carré de la charge d'échantillon ($Q_1$) et à des troisièmes forces électrostatiques ($d_i.V_i.Q_1$) qui sont proportionnelles au produit des potentiels élevés d'électrode ($V_i$) et de ladite charge d'échantillon ($Q_1$), en ce que les électrodes sphériques (2, 3) ont des surfaces convexes tournées vers l'échantillon (1), et en ce que le dispositif comprend en outre une enveloppe conductrice (4) entourant l'échantillon (1) et les électrodes (2, 3) et qui est portée à un potentiel de terre de manière à préserver la charge d'échantillon ($Q_1$) de quelconques parasites électromagnétiques, et une électrode conductrice torique (5) ayant son centre au milieu de la ligne joignant les centres des deux électrodes sphériques (2, 3), ladite électrode torique (5) étant portée à un potentiel ayant la même polarité que la charge d'échantillons ($Q_1$).

2. Un dispositif de suspension électrostatique d'un échantillon selon la revendication 1, caractérisé en ce que la charge électrostatique d'échantillon est positive.

3. Un dispositif de suspension électrostatique d'un échantillon comme revendiqué dans la revendication 1 ou 2, caractérisé en ce que le dispositif comprend un transformateur différentiel (19) avec un enroulement primaire alimenté en courant alternatif et deux enroulements secondaires connectés aux électrodes sphériques (2, 3) via un circuit (60) de superposition de signaux de détection de position d'échantillon et de signaux de commande de positionnement d'échantillon pour former un pont de mesure capacitif et pour mesurer les différences des coefficients de capacité ($C_{12}$, $C_{13}$) entre l'échantillon (1) et les électrodes (2, 3), les lignes ($51_2$, $51_3$) connectant les électrodes (2, 3) au transformateur (19) étant des câbles triaxiaux avec un blindage intérieur connecté au point milieu (20) des enroulements secondaires et un blindage extérieur connecté au potentiel de terre.

FIG.1

FIG.2

# FIG.3

EP 0 169 762 B1

FIG.4

# FIG.5

EP 0 169 762 B1

# FIG.6